# EUROPEAN PATENT APPLICATION

(11) **EP 3 960 530 A1**
(43) Date of publication of application: **02.03.2022**
(21) Application number: 20193517.8
(22) Date of filing: 31.08.2020
(51) Int. Cl.: B60L 53/66, B60L 53/67

(54) **APPARATUS, METHOD AND COMPUTER PROGRAM FOR DETERMINING A PLURALITY OF INFORMATION OF A LOCATION OF A CHARGING STATION**

(71) Applicant: Bayerische Motoren Werke Aktiengesellschaft, 80809 München (DE)
(72) Inventor: Batir, Sean, San Jose, 95110 (US); Vankayala, Anderson, Mountain View, 94040 (US); Langton, Adam, San Francisco, 94129 (US)

(57) **Abstract**

Apparatus (11) for determining a plurality of information for a location of a charging station for electric vehicles, wherein the apparatus (11) is configured to
- provide data of at least two sources, wherein the respective data is representative for data concerning a vehicle and/or data concerning a location and/or data concerning a charging station, wherein the at least two sources are different from each other;
- determine based on the data of the at least two sources the plurality of information for the location of the charging station and
- output the plurality of information for the location of the charging station.

## Description

The invention relates to an apparatus for determining a plurality of information for a location of a charging station for electric vehicles. The invention further relates to a method for determining a plurality of information for a location of a charging station for electric vehicles. The invention further relates to a computer program for determining a plurality of information for a location of a charging station for electric vehicles.

Electric vehicle adoption is increasingly an important policy goal for local and national governments throughout the world. As automakers increase their production of electric vehicles, governments and electric utilities are planning to increase their investment in electric vehicle charging infrastructure. Further, the presence of electric vehicle charging infrastructure can also have a consequence on electric vehicle adoption. The perceived scarcity of electric vehicle charging infrastructure contributes to some buyers being reluctant to buy an electric vehicle. Increasing infrastructure can make drivers feel more comfortable with the decision to buy an electric vehicle. In this way, electric vehicle charging infrastructure can have a positive impact on electric vehicle adoption regardless of whether or not it is used.

The object of the invention is to determine suitable locations of a charging station.

This object is achieved by the features of the independent claims. Advantageous embodiments of the invention are given in the sub-claims.

In a first aspect, the invention is distinguished by an apparatus for determining a plurality of information for a location of a charging station for electric vehicles. The apparatus is configured to provide data of at least two sources, wherein the respective data is representative for data concerning a vehicle and/or data concerning a location and/or data concerning a charging station, wherein the at least two sources are different from each other. The apparatus is further configured to determine based on the data of the at least two sources the plurality of information for the location of the charging station. The apparatus is further configured to output the plurality of information for the location of the charging station.

By means of the apparatus it is possible to use multiple sources which aid to determine locations of the charging station, which helps planning and constructing new charging stations. Thus, by means of the apparatus it is possible to provide a plurality of information for putative locations of to-be-built charging stations.
In this document if it is referred to electric vehicles it is referred to an electric vehicle, as, for example, a battery electric vehicle that exclusively uses chemical energy stored in rechargeable battery packs or to a hybrid electric vehicle as, for example, a plug-in hybrid electric vehicle (PHEV).

Examples of the data, the sources and the plurality of information is given in the following embodiments. Further, although the apparatus is described to use two sources, further sources, as for example, 3, 4, 5, 6, 7, 8, 9, 10 could be used.

According to one embodiment one of the two sources is a vehicle database and the respective data is representative for one or more of the following a battery size of a vehicle, a state of charge, SoC, of a battery over time at a parked location, a charging session.

The vehicle database can be a database of a vehicle fleet. The databases may be included in a modular manner, permitting additional data inputs to enrich the available feature set for improved performance of a predictive algorithm. Some instances of these additional databases may include a vehicle telematics database, a cloud based database, an on-PREM database, a hybrid on-PREM database and/or a blockchain backend. Further, the vehicle database can include an energy utility pricing database. In this respect the data concerning a vehicle can be any data of this database. As a further source data of non-electric vehicle parking behavior can be used, as these vehicles could be replaced by electric vehicles in the future. This non- electric vehicle data can be used to predict future electric vehicle data. Thus, the data concerning a vehicle can also include such data.

The above described data can, for example, be extracted from the vehicle database by querying information about charge blocks of vehicles, parking events, trip information and plug information.

According to a further embodiment one of the two sources is a database of a charging station provider and the respective data is representative for one or more of the following a location of a charging station, a cost structure of a charging station, an electrical power of a charging station, an occupancy time of a charging station, an access type of a charging station, a supported port/plug type.

The identification of the access type is, for example, an information if the access is public or private. This data can for example be extracted from the database by querying information about a location map of charging stations and/or a rollout plan of charging stations.

According to a further embodiment one of the two sources is a database of a location and the respective data is representative for one or more of the following an address mapping, a location scoring model of an area, an identification of an access type of a charging station.

The database of a location can be, for example a database of a map.

The address mapping is, for example, representative for a address mapping based on the WGS84. The Location scoring model is, for example, representative for a model which identifies a type of the location, e.g. if the location is located in a residential or a business area.

This data can, for example, be extracted from the database by querying information about a place of interest or a reverse geocode.

According to a further embodiment the plurality of information for the location of the charging station comprises one or more of the following: an expected occupancy at the location of the to-built charging station, an expected charger throughput at the location of the to-built charging station, an expected amount of annual charging events at the location of the to-built charging station, an expected annual electrical energy of charging at the location of the to-built charging station, an expected annual new electric driven distance of vehicles at the location of the to-built charging station.

The expected annual electrical energy of charging can, for example, be measured in kilowatt hours. The expected annual new electric driven distance can, for example, be measured in miles and/or kilometres. The expected annual new electric driven distance can for example be connected to a type of the vehicles, as for example expected annual new electric driven distance of PHEVs.

The plurality of information for the location of the charging station can further comprise an information about a renewable energy component or an information about a saved amount of carbon dioxide.

According to a further embodiment the determining the plurality of information for the location of the charging station is based on a query of a user, wherein the query comprises one or more of the following: a specified user input location, an event conversion rate comprising the conversion of historical parking events into charging events and/or the conversion of predicted future vehicle parking events into charging events, a radius limit around the specified user input location, a charging power of the charging station, a number of charging stations available at the specified user input location, a level of a charging station.

The level of a charging station can be defined, for example according to the U.S.-based SAE International, wherein Level 1 represents a household 120V AC charging, Level 2 represents upgraded household 240V AC represents and Level 3 represents super charging, as 480V DC or higher.

The radius limit can also include an inner and outer radius around the specified user-input location.

According to a further embodiment the apparatus comprises an output device for outputting the plurality of information for the location of the charging station by means of a graphical user interface, the output device comprising one of the following: an augmented reality headset, a virtual reality device, a mobile computing device, a centralized visualization platform.

The mobile computing device can for example be a cellular smart phone or a laptop.

The centralized visualization platform can be, for example, a central on-premises display for situational awareness.

According to a further embodiment the apparatus is configured to determine the plurality of information for the location of the charging station based on one or more of the following: Monte Carlo Simulation, Hidden Markov model, Random Forest, Convolutional Recurrent Neural Network, Reinforcement learning, Gradient Boosting.

According to a further embodiment the apparatus is configured to determine the plurality of information for the location of the charging station similar, but not all exclusive, to the following: Monte Carlo Simulation, Hidden Markov model, Random Forest, Convolutional Recurrent Neural Network, Reinforcement learning, Gradient Boosting.

According to a second aspect the invention is distinguished by a method for determining a plurality of information of a location of a charging station for electric vehicles. The method comprises sending a query of a user regarding the plurality of information for the location of the charging station to the apparatus for determining the location of the charging station of the first aspect. The method further comprises determining, by the apparatus the plurality of information for the location of the charging station. The method further comprises outputting the plurality of information for the location of the charging station.

For example a user may input a location for future charging infrastructure, and the apparatus generates an estimate of the charging occupancy and throughput for a charger at that location. For example vehicle parking data is used to estimate what charging events get assigned to this location.

According to a further aspect the invention is distinguished by a computer program comprising instructions which, when the program is executed by a computer, cause the computer to carry out the steps of the method of the second aspect.

According to a further aspect the invention is distinguished by a computer-readable storage medium comprising instructions which, when executed by a computer, cause the computer to carry out the method of the second aspect.

Exemplary embodiments of the invention are explained in the following with the aid of schematic drawings.

These are as follows:
Figure 1 a system for determining a plurality of information of a location of a charging station for electric vehicles and
Figure 2 a flowchart for determining a plurality of information of a location of a charging station for electric vehicles.

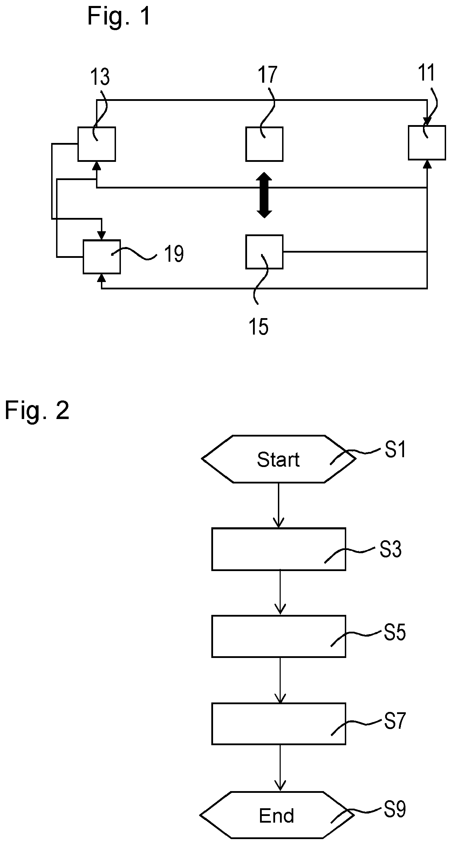

Figure 1 shows a system for determining a plurality of information of a location of a charging station for electric vehicles.

The system comprises an apparatus 11 for determining a plurality of information of a location of a charging station for electric vehicles.

The apparatus 11 is configured to provide data of at least two sources, wherein the respective data is representative for data concerning a vehicle and/or data concerning a location and/or data concerning a charging station, wherein the at least two sources are different from each other. The apparatus 11 is further configured to determine based on the data of the at least two sources the plurality of information for the location of the charging station. The apparatus 11 is further configured to output the plurality of information for the location of the charging station.

The plurality of information can include, for example, an expected occupancy at the location of the to-built charging station, an expected charger throughput at the location of the to-built charging station, an expected amount of annual charging events at the location of the to-built charging station, an expected annual electrical energy of charging at the location of the to-built charging station and/or an expected annual new electric driven distance of vehicles at the location of the to-built charging station.

The apparatus 11 can be implemented, for example, in a computer comprising a processing unit, a program and/or data memory and one or more communication interfaces.

The data can be received, for example, from a data warehousing entity 15 which comprises multiple databases. The data warehousing entity 15 is for example connected to an ETL-Service cluster 17, from which relevant data is constantly imported.

The data can include, for example, a battery size of a vehicle, a state of charge, SoC, of a battery over time at a parked location and/or a charging session.

The data can further include a location of a charging station, a cost structure of a charging station, an electrical power of a charging station, an occupancy time of a charging station and/or an access type of a charging station.

The data can further include an address mapping, a location scoring model of an area, an identification of an access type of a charging station.

The databases can include for example a database of a vehicle fleet, a database of a charging station provider and/or a database of a location or a GNS information.

The apparatus 11 is further connected to a user interface 13, as for example, a graphical user interface 13, from which a user may sent queries to the apparatus 11 and to which the plurality of information for the location of the charging station can be outputted to be visualized for a user.

The visualization can be realized by means of a graphical user interface by use of an augmented reality headset, a virtual reality device, a mobile computing device and/or a centralized visualization platform.

Such a query can include, for example, a specified user input location, an event conversion rate comprising the conversion of historical parking events into charging events and/or the conversion of predicted future vehicle parking events into charging events, a radius limit around the specified user input location, a charging power of the charging station, a number of charging stations available at the specified user input location and/or a level of a charging station.

For example based on such query, the determination of the plurality of information for the location of the charging station can be executed.

To improve performance for the determination, the apparatus 11 can be connected to a results archive 19 so that the apparatus 11 can use results for older and/or similar queries for the determination of the plurality of information.

The determination can be based on a Monte Carlo Simulation, Hidden Markov model, Random Forest, Convolutional Recurrent Neural Network, Reinforcement learning and/or Gradient Boosting.

Figure 2 shows a flowchart of a program for determining a plurality of information of a location of a charging station for electric vehicles. The program can be executed by the system described in figure 1.

In a step S1 the program is started and, for example, variables are initialized.

In a step S3 a query is sent, for example from the user interface 13 to the apparatus 11. The query can be the query as explained above for figure 1.

In a step S5 the plurality of information for the location of the charging station is determined, for example by the apparatus 11. The determination can be done as explained above for figure 1.

In a step S7 the plurality of information for the location of the charging station is outputted. This can be done as explained above for figure 1.

In a step S9 the program is stopped and can be started again in the step S1.

As concrete example, in step S3, as a query, a user may input a location for future charging infrastructure. In step S5, as information, the apparatus 11 determines an estimate of the charging occupancy and/or throughput for a charger at that location. For this determination, as data, the apparatus 11 uses vehicle parking data to estimate what charging events get assigned to this location.

### List of reference signs

- 11: Apparatus
- 13: User interface
- 15: Data warehousing entity
- 17: ETL-Service cluster
- 19: results archive
- S1-S9: Steps

## Claims

1. Apparatus (11) for determining a plurality of information for a location of a charging station for electric vehicles, wherein the apparatus (11) is configured to
- provide data of at least two sources, wherein the respective data is representative for data concerning a vehicle and/or data concerning a location and/or data concerning a charging station, wherein the at least two sources are different from each other;
- determine based on the data of the at least two sources the plurality of information for the location of the charging station and
- output the plurality of information for the location of the charging station.

2. Apparatus (11) according to claim 1, wherein one of the two sources is a vehicle database and the respective data is representative for one or more of the following
- a battery size of a vehicle,
- a state of charge, SoC, of a battery over time at a parked location,
- a charging session.

3. Apparatus (11) according to claim 1 or 2, wherein one of the two sources is a database of a charging station provider and the respective data is representative for one or more of the following
- a location of a charging station,
- a cost structure of a charging station,
- an electrical power of a charging station,
- an occupancy time of a charging station,
- an access type of a charging station.

4. Apparatus (11) according to any of the claims 1 to 3, wherein one of the two sources is a database of a location and the respective data is representative for one or more of the following
- an address mapping,
- a location scoring model of an area,
- an identification of an access type of a charging station.

5. Apparatus (11) according to any of the claims 1 to 4, wherein the plurality of information for the location of the charging station comprises one or more of the following
- an expected occupancy at the location of the to-built charging station,
- an expected charger throughput at the location of the to-built charging station,
- an expected amount of annual charging events at the location of the to-built charging station,
- an expected annual electrical energy of charging at the location of the to-built charging station,
- an expected annual new electric driven distance of vehicles at the location of the to-built charging station.

6. Apparatus (11) according to any of the claims 1 to 5, wherein the determining the plurality of information for the location of the charging station is based on a query of a user, wherein the query comprises one or more of the following:
- a specified user input location,
- an event conversion rate comprising the conversion of historical parking events into charging events and/or the conversion of predicted future vehicle parking events into charging events,
- a radius limit around the specified user input location,
- a charging power of the charging station,
- a number of charging stations available at the specified user input location,
- a level of a charging station.

7. Apparatus (11) according to any of the claims 1 to 6, wherein the apparatus (11) comprises an output device or a plurality of output devices for outputting the plurality of information for the location of the charging station by means of a graphical user interface, the output device or the plurality of output devices comprising one or more of the following:
- an augmented reality headset,
- a virtual reality device,
- a mobile computing device,
- a centralized visualization platform.

8. Apparatus (11) according to any of the claims 1 to 7, wherein the apparatus (11) is configured to determine the plurality of information for the location of the charging station based on one or more of the following:
- Monte Carlo Simulation,
- Hidden Markov model,
- Random Forest,
- Convolutional Recurrent Neural Network,
- Reinforcement learning,
- Gradient Boosting.

9. Apparatus (11) according to any of the claims 1 to 8, wherein the apparatus (11) is configured to output the plurality of information for the location of the charging station by means of a plurality of user interfaces.

10. Method for determining a plurality of information of a location of a charging station for electric vehicles wherein the method comprises:
- sending a query of a user regarding the plurality of information for the location of the charging station to an apparatus (11) for determining the location of the charging station of one of the claims 1 to 8,
- determining, by the apparatus (11) the plurality of information for the location of the charging station,
- outputting the plurality of information for the location of the charging station.

11. A computer program comprising instructions which, when the program is executed by a computer, cause the computer to carry out the steps of the method of claim 10.
